# EUROPEAN PATENT APPLICATION

(11) **EP 1 701 524 A1**
(43) Date of publication of application: **13.09.2006**
(21) Application number: 06251051.6
(22) Date of filing: 28.02.2006
(51) Int. Cl.: H04M 1/2755

(54) **Wireless telecommunications terminal comprising a digital camera for character recognition, and a network therefor**

(30) Priority: 07.03.2005 US 73783
(71) Applicant: LUCENT TECHNOLOGIES INC., Murray Hill, New Jersey 07974-0636 (US)
(72) Inventor: van der Gaast, Tjietse, 1271 PK Huizen (NL)
(74) Representative: Sarup, David Alexander

(57) **Abstract**

A wireless telecommunications terminal is provided comprising a digital camera and a processor. The digital camera is configured to take a digital photograph of an item showing a character string. The processor is configured to receive data of or relating to the character string read by an optical character recognition (OCR) reader in the digital photograph information, and to process said data.

## Description

### Field of the Invention

The present invention relates to wireless telecommunications, particularly but not exclusively to mobile wireless telecommunications.

### Description of the Related Art

It is known for a user to be presented with a telephone number or other character string on one apparatus, such as a computer terminal screen, a phone book or even a scrap of paper, and then to type the number or other character string into a telephone handset, in order to make the call or otherwise act on the data.

### Summary of the Invention

An example of the present invention is a wireless telecommunications terminal comprising a digital camera and a processor. The digital camera is configured to take a digital photograph of an item showing a character string. The processor is configured to receive data of or relating to the character string read by an optical character recognition (OCR) reader in the digital photograph information, and to process said data.

In some embodiments, the terminal may comprise a display, the processor then being configured to process the data by providing the data of or relating to the character string to the display. In some embodiments, the terminal may include an authorisation stage configured to enable a user of the terminal to indicate to the processor that the character string should be processed further. For example, where the character string is a telephone number, the authorisation stage may enable the user to indicate that a call connection to a terminal associated with the telephone number should be made.

Another example of the invention is a wireless telecommunications network apparatus comprising a receiver, an optical character recognition (OCR) reader, and a transmitter. The receiver is configured to receive information of a digital photograph of an item bearing a character string from a wireless telecommunications terminal. The optical character recognition (OCR) reader is configured to read a character string in the information. The transmitter is configured to transmit, to the wireless telecommunications terminal, data of or relating to the character string read by the OCR reader.

The present invention also relates to broadly corresponding methods.

### Brief Description of the Drawings

Some embodiments of the present invention will now be described by way of example and with reference to the drawings, in which:
Figure 1 is a diagram illustrating a mobile terminal according to a first embodiment,
Figure 2 is a diagram illustrating operation of the mobile terminal shown in Figure 1,
Figure 3 is a diagram illustrating a mobile terminal and network according to a second embodiment,
Figure 4 is a diagram illustrating operation of the mobile terminal and network shown in Figure 3,
Figure 5 is a diagram illustrating a mobile terminal and network according to a third embodiment,
Figure 6 is a diagram illustrating a mobile terminal and network according to a fourth embodiment,
Figure 7 is a diagram illustrating a mobile terminal and network according to a fifth embodiment, and
Figure 8 is a diagram illustrating a mobile terminal and network according to a sixth embodiment,
Figure 9 is a diagram illustrating a mobile terminal according to a further embodiment,
Figure 10 is a diagram illustrating a mobile terminal according to a yet further embodiment.

The drawings are not to scale but are schematic representations.

### Detailed Description

When considering a known system, the inventor realised that it was unnecessarily laborious, and a potential source of error, that a user had to read and type in a telephone number in order to make a call.

The inventor realised that as more and more wireless terminals, such as mobile phones are becoming equipped with built-in digital cameras, it would be useful to be able to point the terminal at a visually displayed phone number and press an appropriate function key on the terminal's keypad, such as a "dial" or "store" function key.

### Number Recognition at the Mobile Terminal

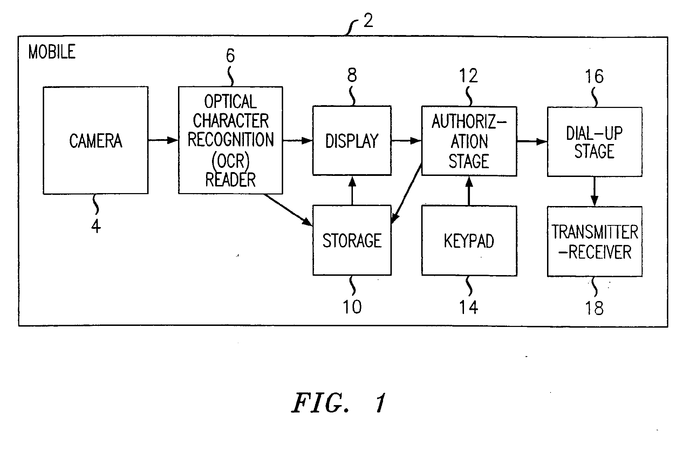

As shown in Figure 1, the mobile terminal 2 includes a digital camera 4 connected to an optical character recognition (OCR) reader 6. The OCR reader 6 is connected both to a visual display 8 of the mobile terminal 2, such as a liquid crystal diode (LCD) display, and also to a storage device 10, such as a memory. The storage device 10 is connected to the display 8. The display 8 is connected to an authorisation stage 12 via which the user can indicate, via keypad 14 connected to the authorisation stage 12, whether he wishes the displayed number to be dialled up. The authorisation stage 12 is accordingly connected to a dial-up stage 16 which is connected to a transmitter-receiver 18.

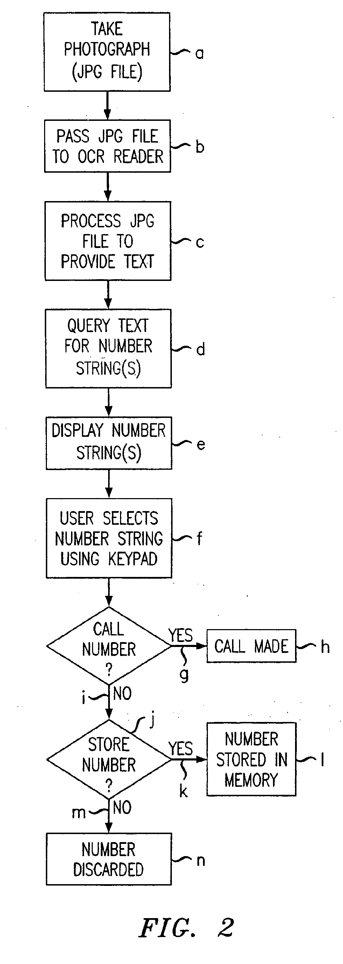

As shown in Figure 2, the mobile terminal 2 shown in the Figure 1 operates as follows:
In the mobile terminal 2, the camera 4 takes a digital photograph in the form of a JPG file (step a). A JPG file is one in accordance with the Joint Photographic Experts Group (JPEG) standard. (In other embodiments, the digital photograph could be, for example, a Tag Image File Format (TIFF) file, a Graphics Interchange Format (GIF) file, or the like.

This JPG file is then passed to the OCR reader 6 (step b).

The OCR reader processes the JPG file to recognise all the text in the picture which it converts to ASCII text, in other words text strings within a text file (step c).

The OCR reader 6 also queries that text file in order to identify number strings (step d).

The OCR reader 6 provides those text strings to the display 8 where they are displayed (step e).

The user selects among the number strings that are displayed on the display 8 using the keypad 14 (step f).

If the user decides to dial-up one of the numbers displayed (step g) then appropriate signals are sent from the keypad 14 causing the authorisation stage 12 to direct the numbers to the dial-up stage 16. A call connection is then made via the transmitter-receiver 18. In other words, a call is made (step h). (In some otherwise similar embodiments, the user can select the type of call made to the identified telephone number string. For example, the dial-up stage 16 can be controlled by the user to select between a voice call or an SMS text message or an e-mail communication.)

If the user elects not to dial the number (step i) then the user is asked to indicate via the keypad 14 whether he wishes the number to be stored (step j).

If he indicates yes (step k) via the keypad 14 then an appropriate signal is sent via the authorisation stage 12 to the storage element 10 so as to store (step *l*) the number for subsequent recall and use.

Alternatively, if the user indicates (step m) via the keypad 14 that the number is not to be stored, then the authorisation stage 12 acts to have that number discarded (step n).

When the OCR reader 6 recognises more than one number string within the digital picture received from the camera 4, it orders the number strings based on location within the picture and relative numeral size. The OCR reader 6 includes optical character recognition software such as "SimpleOCR". Details of "SimpleOCR" are available from the following Internet site address: http://www.simpleocr.com/. "SimpleOCR" is provided by SimpleOCR having postal address of P.O.Box 548, Knoxville, TN 37901-0548, USA, and a physical address of 1808 N.Cherry Street, Knoxville, TN 37917, USA, The OCR reader 6 not only identifies the number strings but also the location of those number strings within the picture.

### Number Recognition at a Remote Node

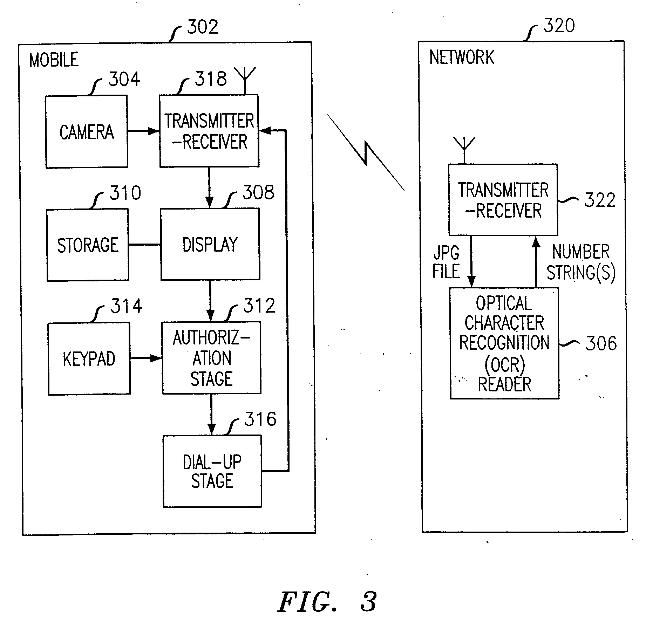

In a second example embodiment shown in Figure 3, the optical character recognition reader is shifted from the mobile terminal to a node within the radio access network, for example to a base station or base station controller.

As shown in Figure 3, in the mobile terminal 302 a digital camera 304 is connected to a radio transmitter-receiver 318. The mobile terminal 302 includes a visual display 308, a storage means 310 such as a memory, and a keypad 314 connected via an authorisation stage 312 to a dial-up stage 316. The dial-up stage 316 is connected to the transmitter receiver 318. In the network node 320, there is a further radio transmitter-receiver 322 connected to an optical character recognition (OCR) reader 306.

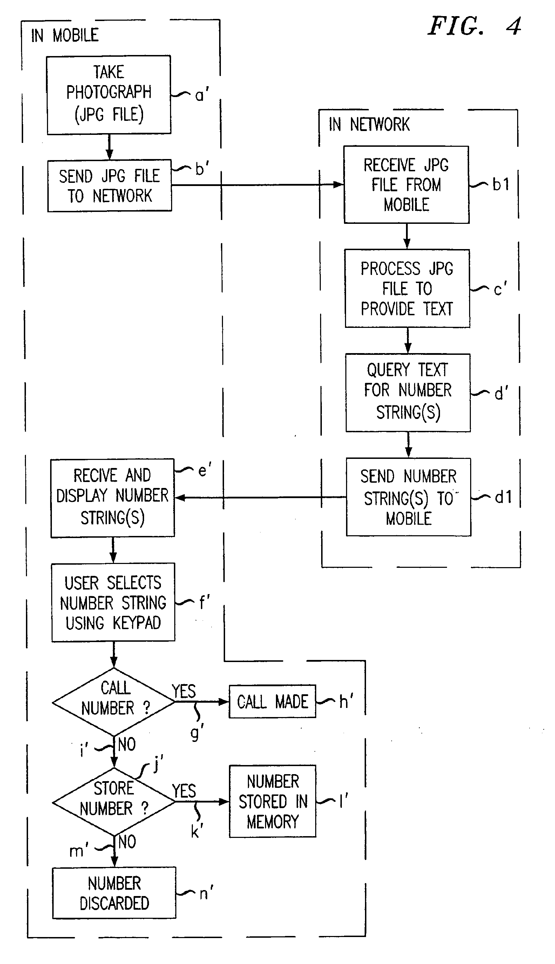

The arrangement shown in Figure 3 operates as shown in Figure 4 as follows:

The camera 304' takes a digital photograph in the form of a JPG file (step a').

This JPG file is passed to the transmitter receiver 318 and so sent by radio (step b') to the network node.

In the network node, this JPG file is received (step b1). The JPG file is then processed (step c'), specifically by converting all text in the picture to ASCII text and giving the results as text strings ordered based on, for example, location within the picture and relative size. The optical character recognition software used is preferably "SimpleOCR" mentioned above, which provides text strings and the location of the text within the picture.

In the optical character recognition reader 306 the text strings are queried to identify number strings (step d').

These number strings are returned to the transmitter receiver 322 from where they are transmitted (step d1) back to the mobile terminal 302.

Back at the mobile terminal 302, those transmitted number strings are received and displayed (step e') on the visual display 308.

The user selects among the number strings that are displayed on the display 8 using the keypad 14 (step f').

If the user decides to dial-up one of the numbers displayed (step g') then appropriate signals are sent from the keypad 314 causing the authorisation stage 312 to direct the numbers to the dial-up stage 316.

A call connection is then made via the transmitter-receiver 318. In other words, a call is made (step h'). (In some otherwise similar embodiments, the user can select the type of call made to the identified telephone number string. For example, the dial-up stage can be controlled by the user to select between a voice call, an SMS text message or an e-mail communication.)

If the user elects not to dial the number (step i') then the user is asked to indicate via the keypad 314 whether he wishes the number to be stored (step j').

If he indicates yes (step k') via the keypad 314 then an appropriate signal is sent via the authorisation stage 312 to the storage element 310 so as to store (step *l*') the number for subsequent recall and use.

Alternatively, if the user indicates (step m) via the keypad 314 that the number is not to be stored, then the authorisation stage 312 acts to have that number discarded (step n').

The picture is transmitted from the mobile terminal 302 to the network node 322 by e-mail. The number strings are returned to the mobile terminal 302 via a short message service (SMS) message or by e-mail.

### Applications

It will be seen that regardless of whether the optical character recognition is undertaken within the mobile or at a remote node, in these example systems, it is a straightforward matter to make a telephone call. For example, a telephone number on a roadside advertisement such as a billboard can be photographed and dialled-up in a largely automated way as the user of the terminal is driven by in a car. Also, numbers can be photographed from advertisements on television or computer screens etc, and readily dialled up.

There are many applications for such example systems. For example, product packaging can be printed with telephone numbers which are free for the user to dial (i.e. without a call charge to the user). A user can simply photograph the telephone number, and indicate, for example using a single keypad key that he wishes to dial up the number, and by the mobile handset then dialling-up the number, the user hears a description of the product.

Another application is where dialling a phone number in respect of a product causes the user to be charged with the cost of the product. For example, a vending machine for soft drinks can have phone number labels for products. The user sends a SMS message to the selected phone number requesting charging of the appropriate cost to the user's account.

### Some Variants

In the particular example systems described above, it is number strings, specifically telephone number strings, that are sought out by the OCR readers. Of course character strings such as recognised by OCR readers, can include alphabetic letters. One possible variant is basically as shown in Figure 3, but with the OCR reader 306 identifying letter strings, such as words, or alphanumeric strings that are combinations of letters and numbers, rather than number strings for transmission to the mobile terminal. Such character strings are displayed at the mobile terminal and can be selected by the user for incorporation into SMS text messages and/or e-mails.

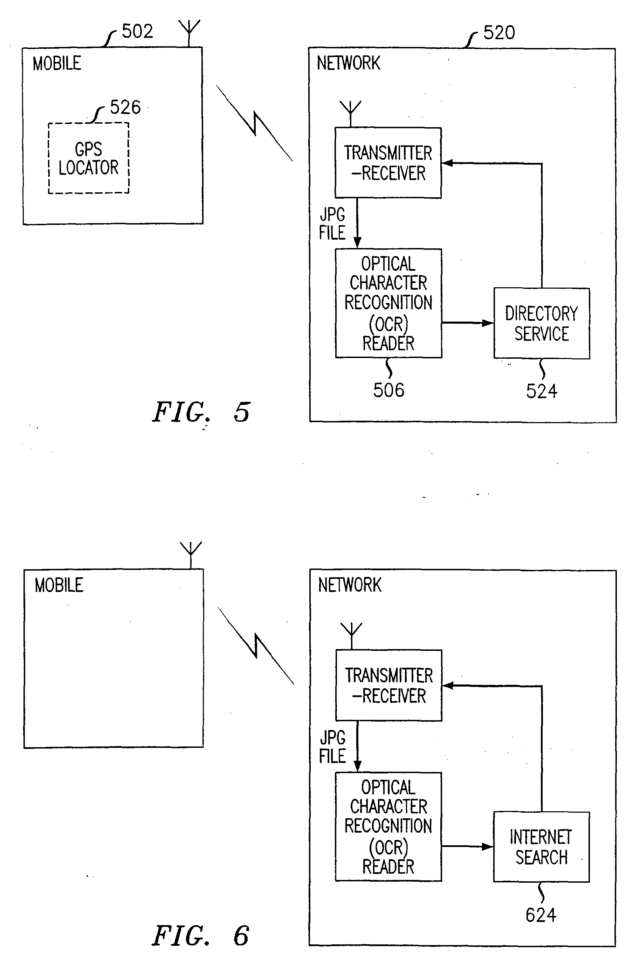

Some other possible variants, in particular to the example system shown in Figure 3, are shown in Figures 5 to 8. In each of these example variants, the mobile terminal and network node are basically as described in respect of Figure 3, subject, of course, to the variations explained below.

As shown in Figure 5, the network node (here denoted 520) can be adapted so that character strings, in particular strings of letters, are directed to a directory service stage 524. The directory service stage 524 acts to inspect directory databases (not separately shown) so as to provide a telephone number from identified letter strings of names, or name and address combinations or the like. The mobile terminal can include a mobile global positioning system (GPS) locator 526, such that position data of the location of the mobile terminal 502 is sent to the network node 520. This position information is passed to the directory service 524 enabling a telephone number to be identified with little information identified by the OCR reader 506; for example merely a person's name or a company name.

In the variant shown in Figure 6, the character string could be an Internet domain name, such as a URL, or a URL-like character sequence, or a search engine 624 such as Google could be used to do a search of letter strings, such as names or words, in the photograph so as to identify possible Internet addresses of interest.

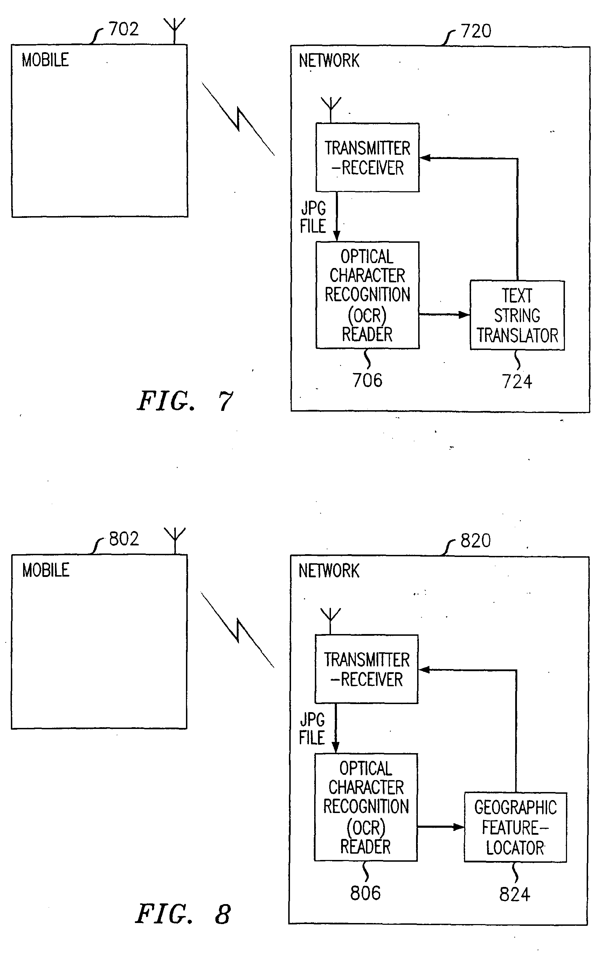

In the variant shown in Figure 7, character strings provided by the optical character reader 706 are input into a character string translator 724. The character string translator 724 is operative to translate letters or words into a selected language or script. For example a photograph of a sign could be taken by the mobile terminal 702, and transmitted to the network node 720. The network node 720 would identify the letter strings using its optical character recognition reader, be they for example, in Arabic, Cyrillic, Chinese or Japanese script. The text string translator 724 would then operate to convert the text strings recognised into for example roman letters. As another example, the character string translator 724 could be used to translate from one language to another, for example French to English.

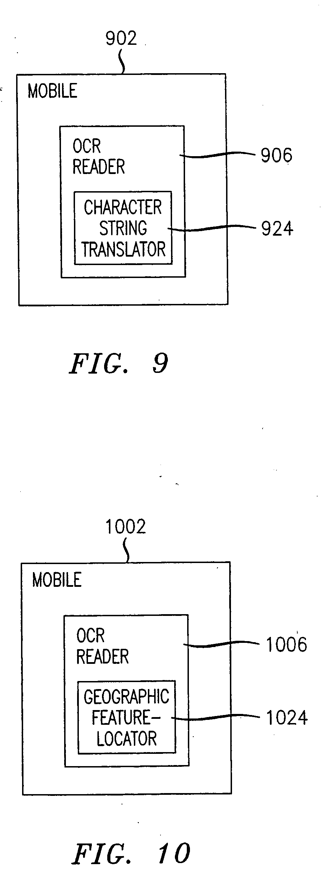

In the variant shown in Figure 8, at the network node 820, the optical character recognition reader 806 is connected to a geographic feature-locator 824. Character string information identified by the OCR reader 806, such as street names from street name-plates, information on signs, and milestones, is provided to the geographic feature-locator 824 which processes that information to give an estimate of the position of the mobile handset and/or an electronic map of the vicinity of that estimated position. That position information or map is then transmitted to the mobile handset 802 for display on the mobile handset 802 so as to inform the user.

In some embodiments, where the OCR reader is in the terminal, for example as shown in Figure 3, the OCR reader can include a character string translator as shown in Figure 9 or a geographic feature-locator as show in Figure 10. As shown in Figure 9, a mobile 902, which is basically as shown in Figure 1 can include an OCR reader 906 including a character string translator 924. The character string translator 924 is operative to translate letters or words into any selected language or script. Similarly as shown in Figure 10, a mobile 1002 that is basically as shown in Figure 1 includes a geographic feature-location 1024 with the OCR reader 1006. The geographic feature-locator 1024 processes the character string information to give an estimate of the position of the mobile handset e.g. on an electronic map.

In some embodiments, other types of OCR software or processors than "SimpleOCR" can be used.

In some embodiments, rather than ordering character strings based on location in the picture and/or relative size, strings can be ordered based on similarity to known telephone numbers for example. In some embodiments character strings can be added to by further software, for example identified telephone number strings can be extended by country codes or area prefixes.

### General

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. Wireless telecommunications network apparatus comprising a receiver, an optical character recognition (OCR) reader, and a transmitter,
the receiver being configured to receive information of a digital photograph of an item bearing a character string from a wireless telecommunications terminal,
the OCR reader being configured to read a character string in the information of the digital photograph,
the transmitter being configured to transmit to the wireless telecommunications terminal data of or relating to the character string read by the OCR reader.

2. Wireless telecommunications network apparatus according to claim 1, comprising a directory enquiry stage configured to process the character string from the OCR reader to provide a telephone number or Internet address, the transmitter configured to transmit the data of the telephone number or Internet address.

3. Wireless telecommunications network apparatus according to claim 1, comprising an Internet search engine configured to process the character string from the OCR reader to provide a Internet address, the transmitter being configured to transmit the data of the Internet address.

4. Wireless telecommunications network apparatus according to claim 1, comprising a character string translation stage configured to process the character string to provide a corresponding character string in another language or alphabet, the transmitter being configured to transmit said corresponding character string.

5. A wireless telecommunications network apparatus according to claim 1, comprising a geographic location stage configured to process the character string to provide information of location of the terminal, wherein the transmitter is configured to transmit said information.

6. A method of using a wireless telecommunications terminal comprising a digital camera, the method comprising the steps of:
taking a digital photograph of an item bearing a character string,
receiving data of or relating to that character string, the character string having been read by optical character recognition, OCR, in information of the digital photograph.

7. A method according to claim 6, comprising the step of displaying said data of or relating to the character string.

8. A method according to claim 6, wherein the data is data of the character string that is a telephone number, the method including the step of the user indicating that a call connection to a terminal associated with the telephone number should be made, and the step of establishing said call connection to said terminal associated with the telephone number.
